# EUROPÄISCHE PATENTSCHRIFT

(11) **EP 1 092 148 B1**
(45) Veröffentlichungstag und Bekanntmachung des Hinweises auf die Patenterteilung: **14.07.2004**
(21) Anmeldenummer: 99926488.0
(22) Anmeldetag: 31.05.1999
(51) Int. Cl.: G01N 29/00

(54) **EIN SYSTEM ZUR SCHNELLEN BERECHNUNG VON DEHNUNGSBILDERN AUS HOCHFREQUENTEN ULTRASCHALL-ECHOSIGNALEN**
SYSTEM FOR RAPIDLY CALCULATING EXPANSION IMAGES FROM HIGH-FREQUENCY ULTRASONIC ECHO SIGNALS
SYSTEME POUR CALCULER RAPIDEMENT DES IMAGES D'ALLONGEMENT A PARTIR DE SIGNAUX D'ECHO ULTRASONORES HAUTE FREQUENCE

(30) Priorität: 29.05.1998 DE 19824108
(43) Veröffentlichungstag der Anmeldung: 18.04.2001
(73) Patentinhaber: LP-IT Innovative Technologies GmbH, 44787 Bochum (DE)
(72) Erfinder: Pesavento, Andreas, 44793 Bochum (DE); Ermert, Helmut, Prof. Dr., 91341 Röttenbach (DE)
(74) Vertreter: Behrendt, Arne
(86) Internationale Anmeldenummer: PCT/EP1999/003769
(87) Internationale Veröffentlichungsnummer: WO 1999/061903

(56) Entgegenhaltungen:
- OPHIR J ET AL: "Elastography: a quantitative method for imaging the elasticity of biological tissues" ULTRASONIC IMAGING, APRIL 1991, USA, Bd. 13, Nr. 2, Seiten 111-134, XP000867151 ISSN: 0161-7346 in der Anmeldung erwähnt

## Beschreibung

### A.1.1 Anwendungsgebiet

Die mechanischen Eigenschaften von biologischem Gewebe (z.B. Elastizitätsparameter) sind für die Beurteilung des Zustandes des Gewebes von großem Interesse. In der medizinischen Diagnostik deuten Veränderungen der Elastizitätseigenschaften auf histologische und unter Umständen pathologische Veränderungen hin. Allgemein bekannt sind Prozesse wie die Bildung von Geschwülsten und Verhärtungen ("Knoten"), die zum Teil manuell tastbar sind ("Palpation"). In der Landwirtschaft ist für die Beurteilung der Qualität des Fleisches von Schlachtvieh die Kenntnis mechanischer Gewebeeigenschaften ebenfalls von Interesse.

### A.2 Stand der Technik

Die sogenannte Tastbefundung ist ungenau und unempfindlich. Wesentlich besser ist in dieser Beziehung die sogenannte Elastographie, bei der elastische Gewebeeigenschaften technisch erfaßt und z.B. in Form von Schnittbildern qualitativ oder quantitativ visualisiert werden [1]. Dabei bedient man sich hauptsächlich des Ultraschalls, wie er als bildgebendes Verfahren in der medizinischen Diagnostik angewandt wird, allerdings in einer modifizierten Betriebsart. In zeitlich nacheinander aufgenommenen Ultraschallbildern können geringste Verschiebungen oder Verformungen innerhalb der dargestellten Gewebestruktur durch Auswertung der Bildsequenzen erfaßt und ausgewertet werden. Wird auf einen Gewebebereich ein mechanischer Druck ausgeübt, der eine Verformung des Gewebes zur Folge hat, so verformen sich Bereiche mit unterschiedlichen Elastizitätseigenschaften verschiedenartig. Ein Elastographiesystem wertet diese Verformungen durch den numerischen Vergleich der Einzelbilder aus und stellt die unterschiedlichen Dehnungen zum Beispiel in Form von Bildern dar. Die notwendige Kompression des Gewebes wird extern durch den Ultraschallwandler provoziert oder intern durch Atmung oder Puls. Die Kompression ist nur gering und beträgt bei Anwendung des üblichen diagnostischen Ultraschalls zum Teil nur Bruchteile von Millimetern. Der Druck wird in Richtung der Schallausbreitung provoziert.

Ein Verfahren der Ultraschall-Elastographie von Körpergewebe ist erstmalig in einem Aufsatz von J. Ophir et al im Jahre 1991 [1], [2] beschrieben worden. Dabei werden Ultraschallbilder bzw. die korrespondierenden hochfrequenten Ultraschallechosignale, aus denen die üblichen Ultraschallbilder in dem Gerät entstehen, so ausgewertet, daß Verschiebungen des Körpergewebes zwischen zwei oder mehreren, unter verschiedener Kompression des Gewebes aufgenommenen Echosignalen berechnet werden. Auf diese Weise lassen sich die bereits erläuterten Rückschlüsse auf die Elastizität des Organs bis hin zu einer quantitativen Abbildung des Elastizitätsmoduls erzielen.

Die hochfrequenten Echosignale aus einem komprimierten Gewebeabschnitt erreichen den Ultraschallwandler zu einem Zeitpunkt, der von dem Maß der Kompression des betreffenden komprimierten Gewebeabschnitts abhängt. Daraus ergeben sich Laufzeitunterschiede der Echosignale aufgrund der Gewebekompression, die zu Zeitverschiebungen in korrespondierenden Abschnitten zweier im zeitlichen Abstand unter verschiedener Kompression des Gewebes aufgenommener Echosignale führen. Die Hauptaufgabe in der Auswertung der hochfrequenten Ultraschallechosignale zur Berechnung der Dehnung besteht daher darin, diese Zeitverschiebungen aus kurzen zeitlichen Intervallen der hochfrequenten Ultraschalldaten zu berechnen. Zeitverschiebungen zwischen korrespondierenden Echosignalen werden an mindestens einer Stelle im Gewebe oder aber in Form eines zweidimensionalen Bildes berechnet. Für die Berechnung einer Zeitverschiebung wird die Kreuzkorrelationsfunktion zwischen den hochfrequenten Echodaten verwendet. Einerseits kann die Zeitverschiebung durch Suchen des Maximums der Kreuzkorrelationsfunktion ermittelt werden [1]. Andererseits kann die Zeitverschiebung aus der Phase eines beliebigen Wertes der Kreuzkorrelationsfunktion, in der Regel aber des Wertes an der Stelle Null, geschätzt werden [3],[4].

Nach der Berechnung der Zeitverschiebung kann die lokale Dehnung durch Gradientenbildung an mindestens einer Stelle im Gewebe oder ebenfalls in Form eines zweidimensionalen Bildes mit Hilfe einfacher linearer Filter [6] oder durch Differenzbildung berechnet und gegebenenfalls abgebildet werden.

### A.2.1 Nachteile des Standes der Technik

Bei allen Verfahren zur Berechnung der Zeitverschiebung werden Werte der Kreuzkorrelationsfunktion korrespondierender Intervalle der Echosignale aus dem gleichen Gewebeabschnitt unter verschiedener Kompression verwendet. Die Auswertung der Kreuzkorrelationsfunktion ist aufgrund der dabei notwendigen Integration über das ganze Intervall zeitaufwendig. Die bisher vorgeschlagenen Verfahren lassen sich in zwei Gruppen unterteilen:
1) **Kreuzkorrelationsmethoden:** Verfahren, die das Maximum der Kreuzkorrelationsfunktion durch eine vollständige Suche oder Einschachtelung ermitteln. Dazu müssen die Echosignale in der Regel mit einer sehr hohen Abtastrate abgetastet werden, um auch kleine Zeitverschiebungen genau messen zu können. Diese Verfahren sind äußerst zeitaufwendig, so daß sie nicht in ein Echtzeitsystem oder Online-System implementiert werden können.
2) **Phasenbasierte Verfahren:** Verfahren, die Zeitverschiebungen aus der Phase eines Wertes der Kreuzkorrelationsfunktion der komplexwertigen Ultraschallechosignale (analytische Signale oder Basisbandsignale) schätzen. Nachteile dieser Verfahren sind mögliche Ungenauigkeiten und das Auftreten von Mehrdeutigkeiten bei großen Zeitverschiebungen. Bisher konnten diese Mehrdeutigkeiten nur durch zusätzliche zeitintensive zweidimensionale Vor- oder Nachverarbeitungsschritte verhindert werden.

Aufgrund der Nachteile der bisherigen Verfahren ist es nicht möglich, Ultraschallechodaten hinreichend genau in Echtzeit zu verarbeiten, um Dehnungsbilder in Echtzeit darzustellen. In der Vergangenheit hat sich aber gezeigt, daß bei Ultraschallabbildungsverfahren wie dem klassischen B-Bild oder der Dopplersonographie die Echzeitfähigkeit der Systeme besonders wichtig für eine breite Nutzung dieser Systeme ist.

Ein weiteres Problem ist, daß die Veränderungen Zeitverschiebungen, die sich durch die Kompression des Gewebes ergeben, von der Entfernung zwischen dem Gewebeareal, welche die Echos hervorrufen, und dem Ultraschallwandler abhängen, d. h. nicht konstant sind und mit zunehmender Entfernung monoton ansteigen. Durch Schwankungen der Einhüllenden der Echosignale kommt es daher zu Ungenauigkeiten in der Verschiebungsberechnung, da diese bei der Berechnung der Kreuzkorreltaionsfunktion ein Intervall bestimmter Länge benutzt, in der die Zeitverschiebung ebenfalls nicht konstant ist. Diese Ungenauigkeiten wurden in der Vergangenheit u.a. durch Logarithmieren der hochfrequenten reellen Echosignale [7] vermindert. Nachteilig wirkt sich hierbei aber die Veränderung der Phasen der Signale aus.

### A.2.3 Literaturangaben

[1] Ophir J., Céspedes I., Ponnekanti H., Yazdi Y., Li X.: "Elastography: A quantitative method for imaging the elasticity of biological tissues. *Ultrasonic Imaging 13*, 111-114, 1991
[2] Céspedes I., Ophir J., Ponnekanti H., Maklad N.: Elastography: "Elasticity imaging using ultrasound with application to muscle and breast imaging in vivo. " *Ultrasonic Imaging 15,* 73-88, 1993
[3] O'Donnell M., Skovoroda A. R., Shapo B. M., Emilianov S. Y.: "Internal displacement and strain imaging using ultrasonic speckle tracking". *IEEE transactions on ultrasonics ferroelectrics and frequency control,* 41, 314-325, Mai 1994
[4] N. A. Cohn, S.Y. Emelianov, M. A. Lubinski, und M. O'Donnel, "An elasticity microscope. Part I: methods," *IEEE Trans*. *Ultrason., Ferroelect., Freq*. *Contr*., vol. 44, pp. 1304-1319, 1997
[5] R. W. Schafer, und L. R. Rabiner, "A digital signal processing approach to interpolation," *Proc. of the IEEE,* vol. 61, pp. 692-702, 1973
[6] F. Kallel, und J. Ophir, "A least-squares strain estimator for elastography," Utrasonic Imaging 19, 195-208. 1997
[7] I. Céspedes, und J. Ophir, "Reduction of image noise in elastogaphy," *Ultrason*. *Imaging*, vol. 15, pp. 89-102, 1993

### A.3 Aufgabe der Erfindung

Aufgabe der Erfindung ist es, eine Verfahren und eine Vorrichtung zu bereitzustellen, womit Ultraschallechodaten hinreichend genau und möglichst schnell bzw. recheneffizient (z.B. in Echtzeit) so ausgewertet werden können, so daß Werte der Gewebedehnung ermittelt werden. Das Verfahren sollte die gleiche Genauigkeit wie die Kreuzkorrelationsverfahren durch eine möglichst recheneffiziente Signalverarbeitung erreichen.

### A.4 Lösung der Aufgabe

Die Aufgabe der Erfindung wird durch ein Verfahren mit denen Merkmalen des Anspruchs 1 und eine Vorrichtung mit den Merkmalen des Anspruchs 6 gelöst.

In phasenbasierten Verfahren wird die Phasenverschiebung zwischen zwei komplexwertigen Echosignalen als Maß für die Zeitverschiebung benutzt. Für monofrequente, zeitverschobene Signale ist die Phase der Kreuzkorrelationsfunktion zweier komplexwertiger Echosignale (analytische Signale) eine lineare Funktion der zeitlichen Echoverschiebung. Bei der tatsächlichen, d. h. gesuchten Zeitverschiebung hat die Phase der Kreuzkorrelationsfunktion der Signale eine Nullstelle. Die Steigung entspricht der Kreisfrequenz der monofrequenten Signale. Dieser Zusammenhang kann für die Berechnung der Zeitverschiebung aus der Phase der komplexen Kreuzkorrelationsfunktion an einer beliebigen Stelle genutzt werden. Die Phase der Kreuzkorrelationsfunktion kann allerdings aufgrund der Mehrdeutigkeit der Arcustangensfunktion numerisch nicht eindeutig ermittelt werden, daher kann auch ihre Nullstelle nicht eindeutig ermittelt werden. Außerdem werden in Ultraschall-Puls-Echosystemen möglichst breitbandige Signale verwendet. Für bandbegrenzte Signale gilt der obige linearer Zusammenhang zwischen der Zeitverschiebung und der Phase der Kreuzkorrelationsfunktion nur approximativ. Diese Tatsachen führen zu den genannten Problemen der Ungenauigkeit und der Mehrdeutigkeit phasenbasierter Verfahren.

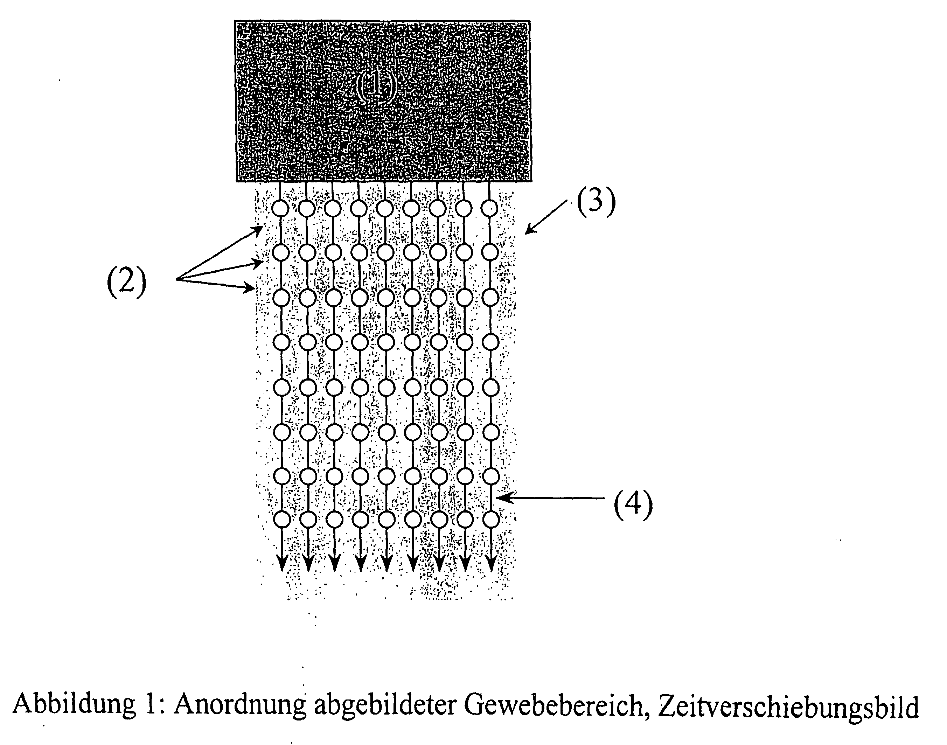

Beide Probleme (Mehrdeutigkeit, Ungenauigkeit bei Breitbandsignalen) können gelöst werden, indem iterativ die Phase der Kreuzkorrelationsfunktion korrespondierender Echosignale für die Suche des Maximums der Kreuzkorretationsfunktion bzw. der Nullstelle der Phase der Kreuzkorrelationsfunktion verwendet wird. Die vom Ultraschallwandler aufgenommenen Echodaten sind gemäß Abbildung 1 in A-Linien organisiert. Die Berechnung von Zeitverschiebungen erfolgt an verschiedenen diskreten, mindestens jedoch an einem Punkt im Gewebe. In der Elastographie ist die Zeitverschiebung, die an diesen diskreten Punkten berechnet werden kann ein stetige, monotone Funktion über der Tiefe.

Die Zeitverschiebungen werden daher sukzessiv für jede A-Linie, beginnend bei dem dem Ultraschallwandler nächstgelegenen Punkt bis zum tiefsten Punkt berechnet. An dem Ultraschallwandler nächstgelegenen Punkt ist die Phase des Wertes der Kreuzkorrelationsfunktion trotz der Mehrdeutigkeit der Arcustangensfunktion eindeutig, da die Zeitverschiebungen dort sehr gering sind. Für die Berechnung einer Zeitverschiebung der Echos an einem Punkt im Gewebe wird die folgende Iteration durchlaufen:
1.) Die Iteration wird begonnen bei der geschätzten Zeitverschiebung τ, die für den in der gleichen A-Linie dem Ultraschallwandler näherliegenden Punkt ermittelt wurde. Für die Berechnung der dem Ultraschallwandler nächstgelegenen Punkte wird die Iteration bei Null begonnen.
2.) Die Phase des Wertes der Kreuzkorrelationsfunktion der korrespondierenden Ultraschallechodaten an der geschätzten Zeitverschiebung τ wird (im Band von -π bis n) ermittelt. Der ermittelte Wert der Phase ist aufgrund obiger Erläuterungen ungefähr proportional zum Abstand der geschätzten Zeitverschiebung τ zur wirklichen Zeitverschiebung. Die Proportionalitätskonstante entspricht in etwa der Schwerpunktsfrequenz des verwendeten Ultraschallwandlers (Kreisfrequenz). Die Schätzung der Zeitverschiebung τ kann daher verbessert werden, indem der verbleibende Phasenunterschied durch Teilen durch die Schwerpunktsfrequenz des Ultraschallwandlers in eine Zeitverschiebung umgerechnet und die bisherige Schätzung der Zeitverschiebung τ entsprechend verändert wird.

Durch Punkt 1.) wird gewährleistet, daß die Kreuzkorrelationsfunktion stets in der Nähe der wirklichen Zeitverschiebung ausgewertet wird. So kann gewährleistet werden, daß verbleibende Phasenunterschiede trotz der Mehrdeutigkeit der Arcustangensfunktion eindeutig bestimmt und in Zeitverschiebungen umgerechnet werden können.

Durch ein mehrmaliges iteratives Wiederholen von 2.) wird die Ungenauigkeit bei der Umrechnung von Phasenunterschieden in Zeitverschiebungen bei der Verwendung breitbandiger Signale iterativ minimiert.

Insgesamt müssen mit diesem Verfahren für die Berechnung einer Zeitverschiebung nur wenige Werte der Kreuzkorrelationsfunktion (weniger als 10) bestimmt werden, um eine Zeitverschiebung hinreichend genau zu errechnen.

Das vorgestellte Verfahren ist somit in zwei Beziehungen iterativ: Zeitverschiebungen werden durch wiederholtes Verwenden von berechneten Zeitverschiebungen *gleicher* oder *vorangehender* Bildpunkte berechnet.

Da in der Elastographie auch sehr kleine Zeitverschiebungen geschätzt werden müssen, die oft unterhalb der Abtastzeit liegen, müssen die Echosignale geeignet interpoliert werden. Bei dem vorliegenden Verfahren werden wie in [3] und [4] für die Berechnung der Kreuzkorrelationsfunktion daher die komplexen, abwärtsgemischten Signale (Basisbandsignale) verwendet. Das Abwärtsmischen der Echosignale erfolgt direkt nach der Aufnahme der Echosignale. Da diese aufgrund der Bandpaßbegrenzung von Ultraschall-Echosignalen eine deutlich geringere obere Grenzfrequenz aufweisen, reicht bei diesem Verfahren eine recheneffiziente lineare Interpolation zwischen Werten der Echosignale aus, um auch Werte der Kreuzkorrelationsfunktion korrespondierender Echosignale bei Zeitverschiebungen zu bestimmen, die keine ganzzahligen Vielfachen der Abtastzeit sind.

Ungenauigkeiten der geschätzten Phasenverschiebungen werden in diesem Verfahren dadurch vermindert, daß die Amplituden der komplexwertigen Basisbandsignale logarithmiert werden, nachdem sie zuvor um eins erhöht wurden. Die Phasen werden nicht verändert. Dadurch kann die logarithmische Kompression auch für phasenbasierte Verfahren benutzt werden.

### A.4.1 Vorteile der Erfindung

Das Verfahren erreicht im Gegensatz zu bisherigen phasenbasierten Verfahren die gleiche Genauigkeit wie Kreuzkorrelationsmethoden. Dazu muß die Kreuzkorrelationsfunktion für die genaue Berechnung einer Zeitverschiebung nur einige Male (weniger als 10 Mal) ausgewertet werden. Auf diese Weise ist eine Echtzeitauswertung der Echosignale zur Berechnung der Gewebedehnung bereits jetzt mit geeigneten digitalen Signalverarbeitungsanlagen, wie sie in modernen digitalen Ultraschallgeräten zur Verfügung stehen, separat kommerziell erhältlich oder in Form von digitalen Schaltungen gefertigt werden können, möglich.

### A.5 Beschreibung der Abbildungen

Abbildung 1: Mögliche räumliche Anordnung der Ultraschallechosignale (3) sowie der Zeitverschiebungsschätzungen und der Dehnungsbilder. Die Ultraschallechosignale, welche vom Ultraschallwandler (1) empfangen werden, sind in A-Linien (3) organisiert. An jeder A-Linie kann an diskreten Punkten (4) eine Zeitverschiebung zwischen den Echos aus dem komprimierten und dem nicht komprimierten Gewebe berechnet werden. Aus diesen Zeitverschiebungen wird anschließend an den gleichen Stellen die Dehnung berechnet, wodurch sich ein zweidimensionales Bild der Dehnung ergibt. Bei der Berechnung von Zeitverschiebungen wird für jede A-Linie mit dem Punkt begonnen, der dem Ultraschallwandler am nächsten liegt.

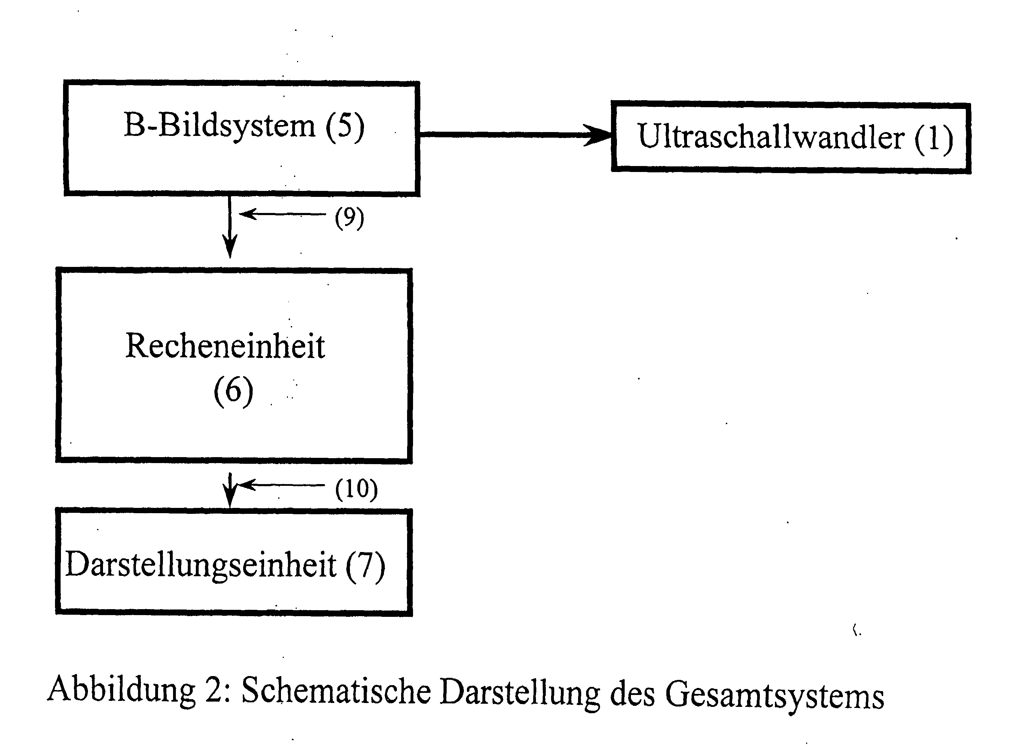

Abbildung 2: Schematische Darstellung des Gesamtsystems eines bevorzugten Ausführungsbeispiels. Das Gesamtsystem besteht aus einem konventionellen Ultraschall B-Bildsystem (5) mit einem oder mehreren Ultraschallwandlern (1). Die Dehnungsbilder (10) werden aus den hochfrequenten Echodaten (9) von einer Recheneinheit (6) berechnet und auf einer Darstellungseinheit ausgegeben.

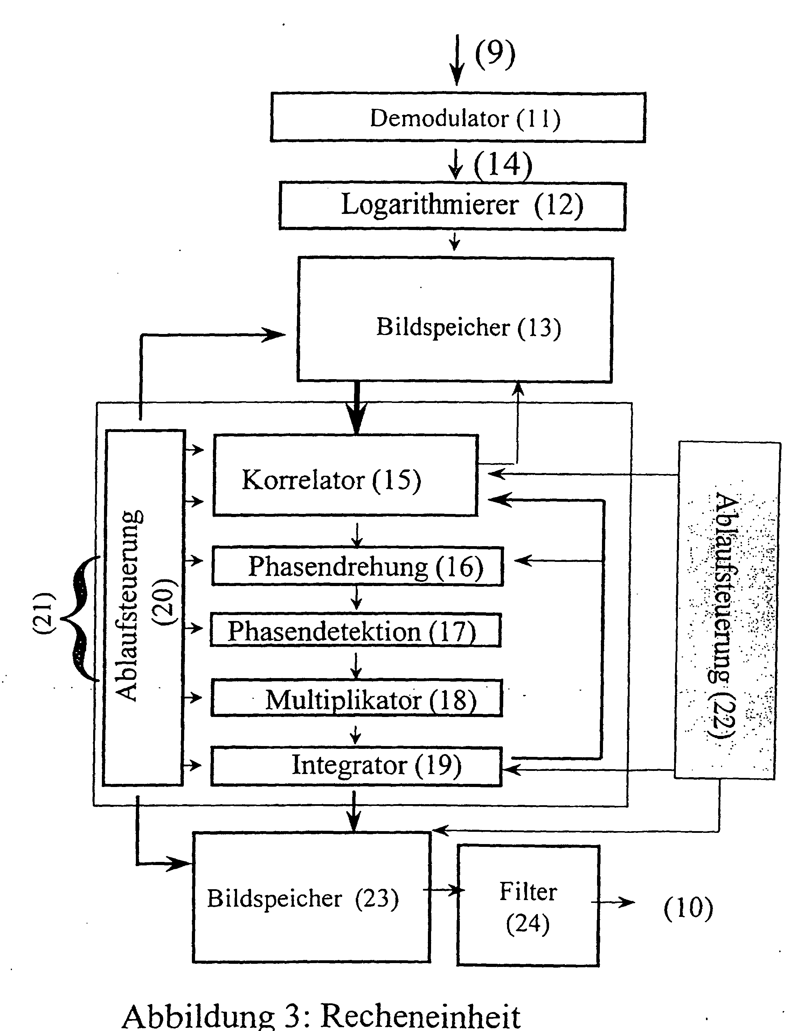

Abbildung 3: Ausführungsbeispiel für die Recheneinheit (6), in der die Dehnung durch iterative Auswertung der Phasen der Kreuzkorrelationsfunktion mindestens zweier Echosignale berechnet wird. Die Recheneinheit (6) berechnet aus den am Eingang anliegenden hochfrequenten Echodaten (9), die von einem B-Bildsystem (5) aufgenommen wurden, Dehnungsbilder (10) und gibt sie an die Darstellungseinheit (7) weiter. Vor der Berechnung werden die Echodaten in einem Quadraturdemodulator (11) in Basisbanddaten (14) umgewandelt. Die Berechnung von Zeitverschiebungen erfolgt in der Einheit zur Berechnung einer Zeitverschiebung (21).

### B Beschreibung eines bevorzugten Ausführungsbeispiels

Ausführungszeichnungen der Erfindung sind in Zeichnungen dargestellt und werden im folgenden näher beschreiben:

### B. 1 Schematische Darstellung eines System zur Aufnahme, schnellen Berechnung und von Darstellung von Dehnungsbildern (Abbildung 2)

Das System zur Aufnahme, schnellen Berechnung und Darstellung von Dehnungsbildern besteht aus drei Funktionseinheiten:
a) ein handelsübliches Ultraschallsystem (5) mit einem oder mehreren Ultraschallwandlem (1). Diese können Ultraschallechodaten mit verschiedenen Scanprinzipien aufnehmen (Sektor-Scan, Parallel-Scan). Ebenso spielt die Art der Fokussierung (elektronisch oder durch einen Einzelwandler mit konstantem Fokus) keine Rolle. Die hochfrequenten Echodaten müssen in digitalisierter Form vorliegen. Bei Systemen mit analogem Beamformer, oder bei Systemen mit Einzelwandler müssen die analogen hochfrequenten Echodaten direkt nach dem Beamformer, bzw. nach dem Einzelwandler abgegriffen und digitalisiert werden. Bei Systemen mit digitalem Beamformer können die digitalen Echodaten direkt abgegriffen werden.
b) eine Recheneinheit (6) zur schnellen Berechnung der Dehnung. Dies ist das Kernstück der Erfindung. Diese Recheneinheit kann sich innerhalb oder außerhalb des Ultraschallgerätes befinden. Die Recheneinheit kann durch eine digitale Schaltung oder aber durch eine DSP-Karte, einen anderen Rechner, bzw. eine Recheneinheit des Ultraschallgerätes realisiert werden (siehe Abbildung 3)
c) eine Darstellungseinheit (7). Diese Darstellungseinheit kann sich ebenfalls innerhalb oder außerhalb des Ultraschallgerätes befinden. Es können die Darstellungsmöglichkeiten des Ultraschallgerätes verwendet werden. Bei Anschluß eines externen Rechners als Recheneinheit können grafische Darstellungsmöglichkeiten dieses Rechners verwendet werden.

Die Berechnung der Dehnungsbilder kann in Echtzeit, online oder offline nach der Aufnahme der Ultraschallechodaten erfolgen. Für die Darstellung der Dehnungsbilder kann das Dehnungsbild komplett dargestellt werden, ein Teil des B-Bildes in einem bestimmten Bereich (Region of Interest) durch das Dehnungsbilder überblendet oder eingefärbt werden. Zudem kann das Dehnungsbild grauwert oder farbkodiert dargestellt werden.

### B.2 Realisierung der Recheneinheit (Abbildung 3)

Die Recheneinheit kann in folgender Weise zum Beispiel als Digitalschaltung realisiert werden: zunächst müssen die hochfrequenten Echodaten von einem Domodulator (11) demoduliert werden. Die resultierenden Daten (14) sind abwärtsgemischt und komplexwertig. Sie werden Basisbanddaten oder IQ-Daten genannt. Die Amplituden der Basisbanddaten werden nun wahlweise logarithmisch komprimiert (12).

Die entsprechend aufbereiteten Basisbanddaten werden in einem Zwischen-Bildspeicher (13), abgespeichert. Dieser Zwischenspeicher muß die Basisbanddaten (14) jeweils zweier zeitlich aufeinanderfolgender B-Bilder speichern können. Mindestens müssen jedoch die Basisbanddaten zweier zeitlich versetzt unter verschiedener Gewebekompression aufgenommener Echosignale gespeichert werden.

Der Speicher kann daher nach dem FIFO-Prinzip immer, wenn die Basisbanddaten eines neuen Bildes am Eingang anliegen, die Echodaten des vorletzten Bildes löschen.

Die Berechnung der Zeitverschiebung erfolgt in einer gesonderten Einheit (21). Diese kann in einer digitalen Schaltung auch mehrfach vorhanden sein. Dadurch können die Zeitverschiebungen mehrerer A-Linien gleichzeitig berechnet werden. Der Ablauf wird von einer globalen Ablaufsteuerung (22) gesteuert. Diese Ablaufsteuerung steuert die Berechnung der Zeitverschiebung an verschiedenen diskreten Positionen. Die Zeitverschiebungen werden gemäß Abbildung 1 an einem oder an verschiedenen diskreten Bildpunkten (2) berechnet. Verschiedene A-Linien können parallel oder nacheinander abgearbeitet werden. Bei der Berechnung der Zeitverschiebungen einer A-Linie wird mit demjenigen Punkt begonnen, der dem Wandler am nächsten liegt und danach sukzessive Zeitverschiebungen an tiefer liegenden Punkten berechnet. Dieser Ablauf muß von der globalen Ablaufsteuerung (22) kontrolliert werden.

Die Einheit zur Berechnung einer Zeitverschiebung (21) enthält folgende Elemente: Werte der komplexe Kreuzkorrelationsfunktion zweier Echosignale werden an der durch den Integrator (19) vorgegebenen Stelle von einem Korrelator (15) berechnet. Dieser führt ebenfalls eine Interpolation der Werte im Bildspeicher durch. Der Integrator (19) dient als Speicher für die geschätzte Zeitverschiebung τ während der Iteration. Sein Startwert muß von der globalen Ablaufsteuerung gesetzt werden. Der Startwert für die dem Ultraschallwandler nächstgelegenen Punkte ist Null. Der Startwert für alle anderen Punkte ist die Zeitverschiebung, die für den dem Ultraschallwandler nähergelegenen Punkt berechnet wurde. Die Lage des Intervalls korrespondierender Echosignale, das für die Berechnung eines Wertes der Kreuzkorrelationsfunktion verwendet wird, wird von der globalen Ablaufsteuerung (22) bestimmt. Dieses ist ein Intervall konstanter Länge um den Punkt, an dem die Zeitverschiebung berechnet werden soll. Damit auch Werte der Kreuzkorrelationsfunktion an Stellen berechnet werden können, die nicht ganzzahlige Vielfache der Abtastzeit sind, werden die Daten linear von einem Interpolator (15) interpoliert. Dieser greift auf die Basisband-Echodaten der gleichen A-Linie der beiden B-Bilder im Bildspeicher unter unterschiedlicher Kompression zu. In (15) wird somit ein Wert der Kreuzkorrelationsfunktion der Basisbanddaten berechnet. Um den Wert der Kreuzkorrelationsfunktion der komplexwertigen hochfrequenten Daten bei dieser Zeitverschiebung zu erhalten, muß die Phase des Ergebnisses um das Produkt der Kreisfrequenz des Demodulators (11) mit dem Zeitpunkt an dem die Kreuzkorrelationsfunktion ausgewertet wird (19) in negative Richtung gedreht werden (16). Die Phase dieser komplexen Zahl wird nun berechnet (17) und mit dem reziproken Wert der Schwerpunktsfrequenz des Wandlers (Kreisfrequenz) multipliziert (18), um diesen Phasenwert in eine Zeitverschiebung umzuwandeln. Das Ergebnis wird zum Wert des Interpolators (19) hinzu addiert. Der Ablaufzwischen (15) und (19) muß einige Male (1-10) wiederholt werden. Dies wird von einer Ablaufsteuerung (20) kontrolliert. Das Ergebnis der Iteration ist die gesuchte Zeitverschiebung. Sie wird anschließend in einem Ergebnisbildspeicher (23) abgelegt. Die Stelle, an der das Ergebnis dort abgelegt wird, wird von der globalen Ablaufsteuerung kontrolliert. Der Inhalt des Bildspeichers kann anschließend zur Anzeige gebracht werden, nachdem die Zeitverschiebungswerte durch ein Filter (24) in Dehnungwerte umgewandelt wurden.

Sämtliche Elemente dieser Recheneinheit können auf verschiedene Weise technisch realisiert werden:
1. Jedes oder einige Element kann durch eine digitale Logikschaltung realisiert werden
2. Jedes oder einige Elemente können von einer oder mehreren DSP-Schaltungen oder Mikroprozessorschaltungen realisiert werden.
3. Jedes oder einige Elemente können von einem Rechner innerhalb oder außerhalb des Ultraschallgerätes realisiert werden

## Patentansprüche

1. Verfahren zur Messung der Dehnung elastischen Gewebes mittels Ultraschall, mit den folgenden Schritten:
Aufnehmen von mindestens zwei Echosignalen in zeitlichem Abstand,
Bestimmen mindestens einer Zeitverschiebung zwischen den mindestens zwei Echosignalen durch Verwendung einer Kreuzkorrelationsfunktion der mindestens zwei Echosignale, und
Bestimmen mindestens eines Dehnungswertes aus der mindestens einen Zeitverschiebung,
**dadurch gekennzeichnet, daß** die Bestimmung der Zeitverschiebung durch iterative Auswertung von Phasen einer Vielzahl von komplexen Werten der Kreuzkorrelationsfunktion erfolgt.

2. Ein Verfahren nach Anspruch 1, weiter umfassend:
Beginnen der iterativen Auswertung der Phasen in transducemahen Gewebebereichen, und
Verwendung der dort gewonnenen Zeitverschiebungen als Ausgangspunkt der Iteration in transducerferneren Bereichen.

3. Ein Verfahren nach Anspruch 1, wobei eine Vielzahl von Dehnungswerten in Form eines zweidimensionalen Bildes dargestellt wird.

4. Ein Verfahren nach Anspruch 1, weiter umfassend:
Abwärtsmischen der mindestens zwei Echosignale, und
Durchführung einer linearen Interpolation zwischen Werten der mindestens zwei abwärtsgemischten Echosignale.

5. Ein Verfahren nach Anspruch 1, wobei die Amplituden der abwärtsgemischten Echosignale unter Beibehaltung der Phase logarithmisch komprimiert werden.

6. Eine Vorrichtung zur Messung der Dehnung elastischen Gewebes (6) mit Ultraschall mit:
einem Tranducer (1) zum Aufnehmen von mindestens zwei Echosignalen im zeitlichen Abstand,
einer Vorrichtung zur Bestimmung mindestens einer Zeitverschiebung (21) durch Verwendung einer Kreuzkorrelationsfunktion der mindestens zwei Echosignale,
Einer Vorrichtung zur Berechnung mindestens eines Dehnungswertes aus der mindestens einen Zeitverschiebung (24)
**dadurch gekennzeichnet, daß** die Vorrichtung zur Bestimmung mindestens einer Zeitverschiebung (21) diese Zeitverschiebung durch iterative Auswertung von Phasen einer Vielzahl von komplexen Werten der Kreuzkorrelationsfunktion bestimmt.

7. Eine Vorrichtung nach Anspruch 6, umfassend:
eine Vorrichtung zum Abwärtsmischen (16) der Echosignale, und
eine Vorrichtung zur linearen Interpolation zwischen Werten der mindestens zwei abwärtsgemischten Echosignale.

8. Eine Vorrichtung nach Anspruch 6, umfassend eine Vorrichtung (12) zur logarithmischen Kompression der Amplituden der abwärtsgemischten Echosignale.

9. Eine Vorrichtung nach Anspruch 6, umfassend einer Darstellungseinheit (3) zur Darstellung einer Vielzahl von Dehnungswerten in Form eines zweidimensionalen Bildes in Grauwerten oder farbkodierten Werten.

## Claims

1. Method for measurement of strain in elastic tissue using ultrasound, comprising the following steps:
recording of at least two echo signals at different times,
determination of at least one time delay between the at least two echo signals using a cross-correlation function of the at least two echo signals, and
determination of at least one strain value from the at least one time delay,
**characterized in that** the determination of the time delay is done using an iterative evaluation of phases of a multitude of complex values of the cross-correlation function.

2. Method of claim 1, further comprising:
beginning the iterative evaluation of the phases in tissue regions close to the transducer, and
using the time delays determined there as a starting point for the iteration in regions further away from the transducer.

3. Method of claim 1, wherein multiple strain values are displayed in a two-dimensional image.

4. Method of claim 1, further comprising:
down-conversion of the at least two echo signals, and
performing a linear interpolation between values of the at least two down-converted echo signals.

5. Method of claim 1, wherein the amplitudes of the down-converted echo signals are logarithmically compressed without changing the phase information.

6. Apparatus for the measurement of strain in elastic tissue (6) by means of ultrasound, comprising:
a transducer (1) for the acquisition of at least two echo signals at different times,
a device for the determination of at least one time delay (21) using a cross-correlation function of the at least two echo signals,
a device for computing of at least one strain value from the at least one time delay (24),
**characterized in that** the device for the determination of the at least one time delay (21) determines the time delay using an iterative evaluation of phases of a plurality of complex values of the cross-correlation function.

7. Apparatus of claim 6, further comprising:
a device for down-conversion (16) of the echo signals, and
a device for linear interpolation between values of the at least two down-converted echo signals.

8. Apparatus of claim 6, comprising a device (12) for logarithmic compression of the amplitudes of the down-converted echo signals.

9. Apparatus of claim 6, comprising a display unit (3) for displaying a multitude of strain values in a two-dimensional image of gray values or color-encoded values.

## Revendications

1. Procédé pour mesurer l'allongement d'un tissu élastique par des ultrasons, comprenant les étapes consistant à:
recevoir au moins deux signaux d'écho à un écart temporaire,
déterminer au moins un décalage de temps entre au moins deux signaux écho précités en utilisant une fonction de corrélation croisée d'au moins deux signaux écho précités, et
déterminer au moins une valeur d'allongement à partir d'au moins un décalage de temps,
**caractérisé en ce que** la détermination du décalage de temps a lieu par une évaluation itérative de phases d'une pluralité de valeurs complexes de la fonction de corrélation croisée.

2. Procédé selon la revendication 1, comprenant en outre:
commencement de l'évaluation itérative des phases dans des zones de tissu proches du transducteur, et
utilisation des décalages de temps y obtenus comme point de départ de l'itération dans des zones plus éloignées du transducteur.

3. Procédé selon la revendication 1, où plusieurs valeurs d'allongement sont représentées sous la forme d'une image bidimensionnelle.

4. Procédé selon la revendication 1, comprenant en outre:
un mélange vers le bas d'au moins deux signaux écho, et
l'exécution d'une interpolation linéaire entre des valeurs d'au moins deux signaux écho précités mélangés vers le bas.

5. Procédé selon la revendication 1, où les amplitudes des signaux d'écho mélangés vers le bas, en conservant la phase, sont comprimées d'une manière logarithmique.

6. Dispositif pour mesurer l'allongement d'un tissu élastique (6) avec des ultrasons comportant:
un transducteur (1) pour recevoir au moins deux signaux écho à un écart temporaire,
un dispositif pour déterminer au moins un décalage de temps (21) en utilisant une fonction de corrélation croisée d'au moins deux signaux écho précités,
un dispositif pour calculer au moins une valeur d'allongement à partir d'au moins un décalage de temps (24),
**caractérisé en ce que** le dispositif pour déterminer au moins un décalage de temps (21) détermine ce décalage de temps par une évaluation itérative de phases d'une pluralité de valeurs complexes de la fonction de corrélation croisée.

7. Dispositif selon la revendication 6, comprenant:
un dispositif pour le mélange vers le bas (16) des signaux écho, et
un dispositif pour l'interpolation linéaire entre des valeurs d'au moins deux signaux écho mélangés vers le bas.

8. Dispositif selon la revendication 6, comprenant un dispositif (12) pour la compression logarithmique des amplitudes des signaux d'écho mélangés vers le bas.

9. Dispositif selon la revendication 6, comprenant une unité de représentation (3) pour représenter une pluralité de valeurs d'allongement sous la forme d'une image bidimensionnelle en des valeurs de gris ou des valeurs à code de couleur.
